# EUROPEAN PATENT APPLICATION

(11) **EP 1 550 942 A1**
(43) Date of publication of application: **06.07.2005**
(21) Application number: 04290020.9
(22) Date of filing: 05.01.2004
(51) Int. Cl.: G06F 3/033

(54) **User interface for a device for playback of audio files**

(71) Applicant: Thomson Licensing S.A., 92648 Boulogne Cedex (FR)
(72) Inventor: Au, Matthew Flat F, 14/F, Belleve Court, Newe Territories, Hon Kong (CN); Chan, Sai Fan, c/o Flat B, 7/F, Ocean Mansion, Kowloon, Hong Kong (CN); Lie, Kin Pou Unit C, Floor 17, Tower 9, Bellagio, Hong Kong (CN)
(74) Representative: Thies, Stephan

(57) **Abstract**

The present invention relates to a user interface for an audio device having means for navigating within a plurality of audio files and/or means for changing a playback order.

According to the invention, the user interface includes:
- means (2) for displaying information about at least two audio files of a plurality of audio files;
- means (6) for marking a currently selected audio file; and
- means for changing the sorting order of the plurality of audio files;
whereby upon changing the sorting order of the audio files the currently selected audio file is kept and the new sorting is determined by at least one property of the currently selected audio file.

According to a further aspect of the invention, the user interface further includes means for changing the playback order of the plurality of audio files, whereby upon changing the playback order of the audio files the new playback order is determined by at least one property of the currently played back audio file.

## Description

The present invention relates to a user interface for a device for playback of audio files having means for navigating within a plurality of audio files and/or means for changing a playback order, and to a method for navigating within a plurality of audio files and/or for changing a playback order. Furthermore, the invention relates to a device for playback of audio files using such user interface or method.

Today a plurality of audio devices for storage and playback of compressed audio files are available. Compressed audio files are, for example, files in mp3, mp3Pro or WMA format. Of course, a variety of other compression formats exist. The files are generally stored on disks such as CD-R or CD-RW, on storage cards (e.g. SD-card, CompactFlash-card, etc), or even on hard disks. Some audio devices are connected via a cable or wireless to a personal computer (PC) for accessing audio files stored on the PC. Other audio devices receive audio files via an external network, e.g. via the internet. Due to the compression these audio devices store or access up to several thousands of audio files. Of course, most audio devices are also capable of playing back uncompressed audio files.

The navigation within these audio files, i.e. within the corresponding audio file libraries, is quite cumbersome, especially for audio devices having only a limited space available for displaying information to the user. This is, for example, the case for most portable audio devices such as mp3-players, but also for many micro systems or slim-case audio devices. Different types of navigation menu modes are known. According to these modes the user navigates within the audio files by track numbers or file names, he arranges the audio files in folders and browses the folders, or he uses advanced navigation modes, which allow to sort the audio files by certain features like genre, album or artist. In the latter navigation menu mode, the user chooses the sorting order in a higher level menu and then enters the file directory. If the user decides to change the sorting order, he has to go back into the high level menu to choose the new sorting order.

It is an object of the invention to propose an improved user interface for a device.

According to the invention, this object is achieved by a user interface for a device for playback of audio files, including:
- means for displaying information about at least two audio files of a plurality of audio files;
- means for marking a currently selected audio file; and
- means for changing the sorting order of the plurality of audio files;
whereby upon changing the sorting order of the audio files the currently selected audio file is kept and the new sorting is determined by at least one property of the currently selected audio file.

Alternatively, the above object is also achieved by a method for navigating within a plurality of audio files, including the steps of:
- displaying information about at least two audio files of the plurality of audio files;
- marking a currently selected audio file; and
- changing the sorting order of the plurality of audio files; whereby upon changing the sorting order of the audio files the currently selected audio file is kept and the new sorting is determined by at least one property of the currently selected audio file.
The changing of the sorting order allows a fast access to further audio files having a specific property. If the user has found an audio file by, for example, a specific artist, by simply activating the means for changing the sorting order a number of times he can find other audio files by the same artist, other audio files from the same album, other audio files from the same year, etc. There is no need to go back to the high-level menu to change the sorting order, which would mean that the user had to search for the previously selected audio file again. Navigation is, therefore, more convenient.

Favourably, the user interface further includes means for changing the playback order of the plurality of audio files, whereby upon changing the playback order of the audio files the new playback order is determined by at least one property of the currently played back audio file.
If during playback the user decides that he wants to hear more audio files having the same property as the current audio file, e.g. the same artist, he simply activates the means for changing the playback order. The playback order is then changed and more audio files having the desired property are played back.

Alternatively, a user interface for a device for playback of audio files, includes:
- means for displaying information about at least one audio file of a plurality of audio files; and
- means for changing the playback order of the plurality of audio files;
   whereby upon changing the playback order of the audio files the new playback order is determined by at least one property of the currently played back audio file.

Similarly, a method for determining a playback order of a plurality of audio files, includes the steps of:
- displaying information about at least one audio file of a plurality of audio files; and
- changing the playback order of the plurality of audio files; whereby upon changing the playback order of the audio files the new playback order is determined by at least one property of the currently played back audio file.
   This solution is especially advantageous for a device for playback of audio files having a more limited display without the capability of displaying variable text. In this case no advanced navigation as described above is necessary, since the available information cannot be displayed. However, the changing of the playback order is still conveniently achieved.

Advantageously, the means for changing the sorting order and/or the playback order include a button for changing the order by running through a predefined sequence of properties of the currently selected or played back audio file.
In this way only a single button is needed for either changing the sorting order or the playback order, which is preferable for a device having only limited space available for the user interface, e.g. a portable device. In case both possibilities are provided, either a dedicated button is provided for each function or a single button is provided for both functions. Since both functions are on the one hand quite similar, but on the other hand not used at the same time, the provision of a single button does not lead to any operating conflicts.

Alternatively, the means for changing the sorting order and/or the playback order include two buttons for changing the order by running in opposite directions through a predefined sequence of properties of the currently selected or played back audio file. This has the advantage that by providing only one additional button the ease of operation is further increased. Especially if sorting is possible according to a large number of properties of the audio files, it is preferable to have the possibility to run through these properties in both directions. For example, if ten properties are available and the user wants to change from property #3 to property #1, it is more convenient to go to #1 via #2 instead of going to #1 via #4 to #10.

Preferably, the means for changing the sorting order and/or the playback order include a specific button for each property of the currently selected or played back audio file which is used for determining the order. This allows direct access to each sorting order, which is the most convenient solution. However, this solution is not feasible if the available space is too limited, e.g. because of the miniaturization of the device or because too many properties are available for sorting.

Advantageously, the user interface further includes means for indicating the sorting order and/or the playback order. In this way the user is at a glance informed about the current sorting order and/or the playback order. Each change of the sorting order and/or the playback order is instantly indicated by the specific means, so that the user has a direct feedback to his actions.

Favourably, the properties of the audio files used for determining the order are included in the audio files. This has the advantage that the necessary properties are available to any device used for playback of the audio files. Alternatively, the properties of the audio files used for determining the order are stored in the device for playback of audio files. This is advantageous for file formats, which do not offer any possibility to add specific properties. For example, some formats may not allow to include a user weighting or rating. Other properties which may be used for sorting include the ID3-tags known from mp3-files (with artist, album, genre, release year), the creation date, the last access time, the number of accesses, etc.

Preferably, a device for playback of audio files includes a user interface according to one or performs a method according to the invention.

For a better understanding of the invention, an exemplary embodiment is specified in the following description with reference to the figures. It is understood that the invention is not limited to this exemplary embodiment and that specified features can also expediently be combined and/or modified without departing from the scope of the present invention. In the figures:
- Fig. 1: shows displays of two devices for playback of audio files;
- Fig. 2: shows a navigation menu according to the invention on a first type of display; and
- Fig. 3: shows a playback menu according to the invention on a second type of display.

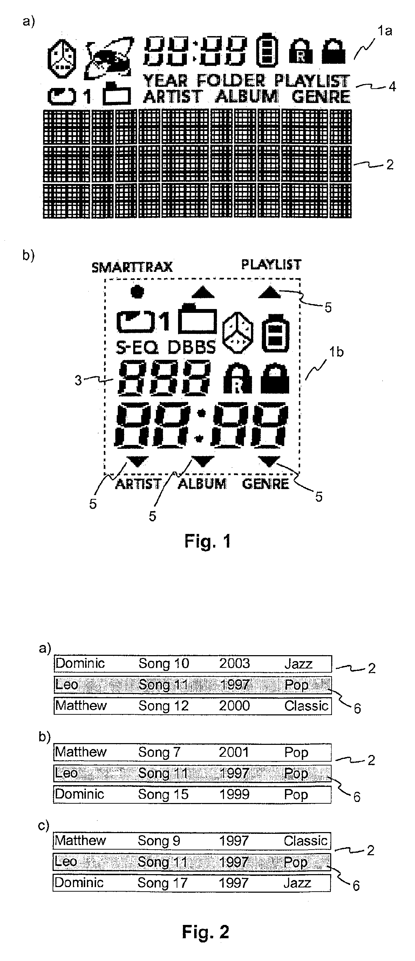

In Fig. 1a) a display 1a of a device for playback of audio files, e.g. a portable mp3-player, is shown. Besides a plurality of symbols and a numerical array for indicating the playing time of an audio file the display 1a includes a three-line text array 2, which is capable of displaying a certain amount of variable text. In addition, the display 1a has a special array 4 in which the sorting and/or playback order of the audio files is indicated, e.g. according to year, folder, artist, album, genre, or playlist. Of course, other properties of the files like the last access time, the number of accesses, the length, the creation date or even a personal weighting by the user etc. can also be used for sorting.

A more limited display 1b for a device for playback of audio files is depicted in Fig. 1b. Similar to the display described with reference to Fig. 1a, the display includes a numerical array for indicating the playing time of an audio file and a plurality of symbols. However, instead of the text array a further numerical array 3 is included for indicating the current file number. In addition, specific symbols 5 are provided for indicating the sorting and/or playback order. Due to the limited available space the symbols 5 are arrows pointing at descriptive words outside the display. Of course, with additional space available it is likewise possible to directly display the descriptive words instead of the symbols 5.

A navigation menu for a display 1a having a text array 2 is depicted in Fig. 2. In the example the text array has three lines. In each line an audio file is listed by indicating the artist, the title or the track number, the release year and the genre. Other information may also be listed. It is to be noted that the amount of listed information depends on the available space and, possibly, on the user preferences. Generally only some of the above information will be listed. In Fig. 2a) the audio files are sorted according to their title. One line 6 of the display is highlighted for indicating the currently selected file. By scrolling the list the user selects a specific audio file for playback. Scrolling the list can be performed in various ways, e.g. by changing the highlighted line 6 or by scrolling the text. In the first case in the beginning the top line is highlighted. When the user scrolls down, the highlighting is first shifted to the mid-line and then to the bottom line. Upon further scrolling down, while the highlighting is shifted back to the top-line, the next three audio files are displayed. In the second case always the mid-line (or any other fixed line) is highlighted. Upon scrolling the indicated audio files are shifted up or down according to the user request. Both methods allow to scroll to any desired audio file.

For easier navigation the device for playback of audio files has a special button (not shown) for re-sorting the audio files, a so-called 'arrange key'. By pressing this button the user changes the sorting order of the audio files. In Fig. 2b) such a re-sorting is shown. By pressing the button once the sorting order is changed to 'by genre', i.e. the audio files are now listed according to their genre. As can be seen in the figure, all three audio files indicated in the display belong to the same genre, e.g. Pop. The sorting order within the top-level sorting is device dependent. In the example, within the genre the audio files are still sorted according to their title. The new sorting is based on the properties of the selected audio file, i.e. the highlighted audio file. As can be seen the highlighted audio file is kept, only the remaining indicated files are changed. Since the highlighted audio file has the genre 'Pop' and the new sorting is according to the genre, the newly indicated audio files also have the genre 'Pop', provided files having this genre are available in the device for playback of audio files. By pressing the sorting button once again, the sorting order is changed from 'by genre' to 'by year'. This is depicted in Fig. 2c). Now all indicated audio files have the same release year. Again, the highlighted audio file is kept, only the other indicated audio files are updated. The sorting order within the release year again is according to the title. The re-sorting allows fast access to further audio files having a specific property. If the user has found an audio file by, for example, a specific artist, by simply pressing the sorting button a number of times he can find other audio files by the same artist, other audio files from the same album, or other audio files from the same year. There is no need to go back to the high-level menu to change the sorting order, which would mean that the user had to search for the previously selected audio file again. Navigation is, therefore, more convenient.

In the example only one button is provided for re-sorting the audio files. Pressing the button changes the sorting order in a predefined sequence, e.g. year → artist → album → genre. Of course, it is likewise possible to provide a specific button for each sorting order, or to provide two buttons for running through the predefined sequence in both directions, i.e. year <-> artist ↔ album ↔ genre.

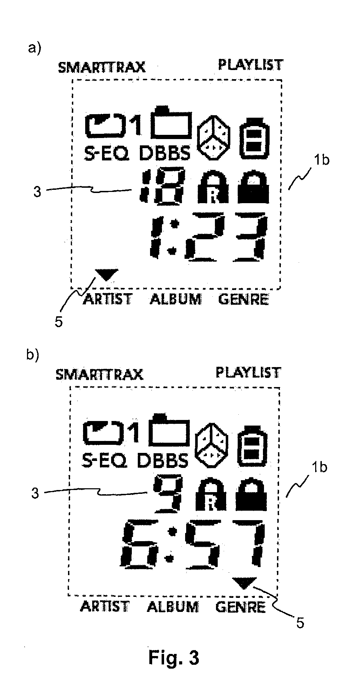

A similar concept applies to the playback order of the audio files. This concept is depicted in Fig. 3 for a display without text array. In this case no advanced navigation is necessary, since the available information cannot be displayed. However, the re-sorting can also be performed during playback. As depicted in Fig. 3a), the playback order of the audio files is 'by artist', as indicated by the symbol 5, and currently file number '18' is played back. If during playback the user decides that he wants to hear more audio files belonging to the same genre as the current audio file, he presses a specific button (not shown) for re-sorting the playback order, the so-called 'more from-key'. The playback order is changed to 'by genre', as indicated by the symbol 5 in Fig. 3b). Therefore, the next audio file, number '9' in the example, belongs to the same genre as the current audio file number '18'. By pressing the button a number of times, the playback order of the audio files is changed in a predefined sequence. Of course, the concept of changing the playback order at the touch of a button is also suitable for the above display 1a having a text array. In this case the 'arrange-key' and the 'more from-key' are advantageously the same buttons, since both features are on the one hand similar, but on the other hand not used at the same time. While the 'arrange-key' is used for navigation before playback, the 'more from-key' is only used during playback. Again, it is likewise possible to provide a specific button for each playback order, or to provide two buttons for running through the predefined sequence of playback orders in both directions.

## Claims

1. User interface for a device for playback of audio files, including:
- means (2) for displaying information about at least two audio files of a plurality of audio files;
- means (6) for marking a currently selected audio file; and
- means for changing the sorting order of the plurality of audio files;
**characterized in that** upon changing the sorting order of the audio files the currently selected audio file is kept and the new sorting is determined by at least one property of the currently selected audio file.

2. User interface according to claim 1, further including means for changing the playback order of the plurality of audio files, **characterized in that** upon changing the playback order of the audio files the new playback order is determined by at least one property of the currently played back audio file.

3. User interface for a device for playback of audio files, including:
- means (3) for displaying information about at least one audio file of a plurality of audio files; and
- means for changing the playback order of the plurality of audio files;
**characterized in that** upon changing the playback order of the audio files the new playback order is determined by at least one property of the currently played back audio file.

4. User interface according to one of claims 1 to 3,
**characterized in that** the means for changing the sorting order and/or the playback order include a button for changing the order by running through a predefined sequence of properties of the currently selected or played back audio file.

5. User interface according to one of claims 1 to 3,
**characterized in that** the means for changing the sorting order and/or the playback order include two buttons for changing the order by running in opposite directions through a predefined sequence of properties of the currently selected or played back audio file.

6. User interface according to one of claims 1 to 3,
**characterized in that** the means for changing the sorting order and/or the playback order include a specific button for each property of the currently selected or played back audio file which is used for determining the order.

7. User interface according to one of claims 2 and 4 to 6,
**characterized in that** the means for changing the sorting order and the means for changing the playback order are the same.

8. User interface according to one of claims 1 to 7, further including means (4,5) for indicating the sorting order and/or the playback order.

9. User interface according to one of claims 1 to 8,
**characterized in that** the properties of the audio files used for determining the order are included in the audio files.

10. User interface according to one of claims 1 to 8,
**characterized in that** the properties of the audio files used for determining the order are stored in the device for playback of audio files.

11. User interface according to one of claims 1 to 10,
**characterized in that** the properties of the audio files used for determining the order include at least one of artist, album, genre, release year, number of accesses, last access, creation date, length, and weighting.

12. Method for navigating within a plurality of audio files, including the steps of:
- displaying information about at least two audio files of the plurality of audio files;
- marking a currently selected audio file; and
- changing the sorting order of the plurality of audio files;
**characterized in that** upon changing the sorting order of the audio files the currently selected audio file is kept and the new sorting is determined by at least one property of the currently selected audio file.

13. Method for determining a playback order of a plurality of audio files, including the steps of:
- displaying information about at least one audio file of a plurality of audio files; and
- changing the playback order of the plurality of audio files;
**characterized in that** upon changing the playback order of the audio files the new playback order is determined by at least one property of the currently played back audio file.

14. Device for playback of audio files, **characterized in that** it includes a user interface according to one of claims 1 to 11 or performs a method according to one of claims 12 or 13.
